## Europäisches Patentamt

## European Patent Office

## Office européen des brevets

(19)

(11) Veröffentlichungsnummer: **0 323 577**
**B1**

(12) # EUROPÄISCHE PATENTSCHRIFT

(45) Veröffentlichungstag der Patentschrift:
19.09.90

(21) Anmeldenummer: 88120328.5

(22) Anmeldetag: 06.12.88

(51) Int. Cl.⁵: **C04B 28/14**, E04F 15/12
// (C04B28/14, 14:06, 14:28,
24:26)

(54) Fussbodenausgleichsmasse.

(30) Priorität: 23.12.87 DE 3743855

(43) Veröffentlichungstag der Anmeldung:
12.07.89 Patentblatt 89/28

(45) Bekanntmachung des Hinweises auf die Patenterteilung:
19.09.90 Patentblatt 90/38

(84) Benannte Vertragsstaaten:
AT BE CH FR GB LI NL

(56) Entgegenhaltungen:
BE-A- 673 963
DE-A- 2 264 075
DE-A- 2 301 435
FR-A- 2 201 387

CHEMICAL ABSTRACTS, Band 103, Nr. 14,
Oktober 1985, Seite 277, Zusammenfassung
Nr. 109165d, Columbus, Ohio, US; &
SU-A-1 158 531 (ALL-UNION SCIENTIFIC-RESEARCH
INSTITUTE OF CONSTRUCTION MATERIALS AND
PRODUCTS: "MOSOBLORGTEKHSTROI"
TRUST) 30-05-1985 tiomers of amino acid and ester
salts"nder phase-transfer conditions", Seite 515,
Spalte 1, Zusammen 000

(73) Patentinhaber: Gebr. Knauf Westdeutsche Gipswerke,
Am Bahnhof 7, D-8715 Iphofen(DE)

(72) Erfinder: Berneth, Claus-Peter, Dr., Lange Gasse 6,
D-8713 Marktbreit(DE)
Erfinder: Poch, Wingolf, Dr., Wiesenweg 5,
D-8715 Iphofen(DE)
Erfinder: Wirsching, Franz, Dr., In den Weinbergen 7,
D-8715 Iphofen(DE)

(74) Vertreter: Böhme, Volker, Dr. et al, Patentanwälte Dr.
Böhme, Kessel, Böhme Karolinenstrasse 27,
D-8500 Nürnberg(DE)

ACTORUM AG

## Beschreibung

Die Erfindung betrifft eine Fußbodenausgleichsmasse, die im angemachten Zustand selbstnivellierend ist und bei der feinteiliger Gips, Kalksteinmehl, feinkörniger Quarzsand, Kunststoff-Dispersionspulver, Verflüssiger und weitere Zusätze vermischt sind.

Eine bekannte (DE-B 23 01 435) Fußbodenausgleichsmasse dieser Art enthält 30 - 60 Gewichtsteile Gips, 2 - 20 Gewichtsteile Kalksteinmehl und 20 - 40 Gewichtsteile Quarzsand sowie zusätzlich 12 - 30 Gewichtsteile Portlandzement. Da der Zement der Masse eine graue Farbe und alkalische Reaktion gibt, ist die Beimischung von Zement in eine Fußbodenausgleichsmasse häufig unerwünscht. Es ist auch eine zementfreie Fußbodenausgleichsmasse bekannt (DE-A 34 03 071), bei der als Bindemittel nur Anhydrit vorgesehen ist und die wegen des Anhydrits relativ langsam abbindet und auch alkalische Reaktion zeigt.

Es ist auch eine Estrichmasse bekannt (DE-A 22 47 756), bei der α-Gips, Weißkalkhydrat, Bausand, Verflüssiger und weitere Zusätze vermischt sind und die zementfrei ist. Die Estrichmasse ist, da sie grobteilige Anteile umfaßt, nicht als Fußbodenausgleichsmasse geeignet. Die bekannte Estrichmasse ist nicht als selbstnivellierend ausgewiesen und enthält kein Kunststoff-Dispersionspulver, das für Fußbodenausgleichsmassen, aus denen dünne Schichten gebildet werden, wichtig ist. Der Bausand gewährleistet die erwünschte Weißigkeit einer Ausgleichsmasse nicht. Wegen des Weißkalkhydrats, das eine aktive Komponente ist, ist die Masse alkalisch. Diese alkalische Masse reagiert mit manchen Untergrund-Substanzen und ist deshalb als Ausgleichsmasse nicht geeignet.

Eine Aufgabe der Erfindung ist es daher, eine Fußbodenausgleichsmasse der eingangs genannten Art zu schaffen, die einerseits nur Calciumsulfat-Bindemittel enthält und andererseits doch beschleunigtes Abbinden aufweist. Die erfindungsgemäße Fußbodenausgleichsmasse ist, diese Aufgabe lösend, dadurch gekennzeichnet, daß bei zementfreier Masse α-Gips mit 25 - 40 Gew.%, Kalksteinmehl mit 20 - 35 Gew.% und Quarzand mit 30 - 50 Gew.% vorgesehen ist und daß die Masse neutral ist.

Die erfindungsgemäße Fußbodenausgleichsmasse weist als Bindemittel Calciumsulfat-Halbhydrat und zwar α-Gips, und nicht etwa ß-Gips, auf und ist zementfrei. Die erfindungsgemäße Ausgleichsmasse ist nach dem Anmachen mit Wasser selbstnivellierend bzw. selbstverlaufend und bindet spannungsfrei sowie raumstabil ab. Die erfindungsgemäße Fußbodenausgleichsmasse zeigt auch neutrale Reaktion und ist nicht alkalisch. Die erfindungsgemäße Fußbodenausgleichsmasse bindet schneller vollständig ab, hat also einen steileren Festigkeitsanstieg. Die Hydratation erfolgt vorteilhaft sehr schnell, so daß das Anmachwasser weniger durch Verdunsten entzogen wird; wegen der dünnen Schichten, die mit einer Fußbodenausgleichsmasse hergestellt werden, soll die Hydratation schnell erfolgen, damit das vor Hydratation notwendige Anmachwasser nicht verdunstet ist. Bei einer mit der erfindungsgemäßen Fußbodenausgleichsmasse hergestellten Schicht ist die Endfestigkeit im Feuchtzustand nach maximal vier Stunden erreicht. Die hergestellte Schicht ist dann vollständig abgebunden, schwindet und reißt nicht. Die erfindungsgemäße Fußbodenausgleichsmasse ist maschinenverarbeitbar, z.B. pumpbar.

Der Ausdruck "Ausgleich" umfaßt das Spachteln mit Schichten bis zu 5 mm Dicke und das eigentliche Ausgleichen mit Schichten bis zu 20 mm Dicke, wobei in der Regel mit der erfindungsgemäßen Fußbodenausgleichsmasse nur Schichten bis zu 15 mm Dicke hergestellt werden. Die erfindungsgemäße Fußbodenausgleichsmasse läßt sich an sich auf allen Arten von Rohböden aufbringen. Sie entwickelt ihre besonderen Eigenschaften besonders ausgeprägt, wenn sie auf Estrichen auf Gips- oder Anhydritbasis aufgebracht wird, da sie diesen artverwandt ist. Sie läßt sich aber auch wegen des schwindungsfreien Trocknens und Abbindens und der neutralen Reaktion mit Vorteil auf Trockenunterböden aus Gipskartonplatten und Gipsfaserplatten aufbringen. Es liegt hier ein Verfahren zur Herstellung einer Fußbodenausgleichsschicht vor. Dabei muß bei Gips- oder Anhydritestrichen in der Regel nicht abgeschliffen werden, bevor die Fußbodenausgleichsmasse aufgebracht wird.

Die erfindungsgemäße Fußbodenausgleichsmasse enthält zusätzlich 0,1 - 0,5 Gew.%, z.B. ca. 0,3 Gew.%, Entschäumer, geringe Mengen, z.B. ca. 0,01 Gew.%, Verzögerer und geringe Mengen, z.B. 0,01 Gew %, Antiabsetzmittel, d.h. Stabilisator gegen die Sedimentation, wobei der Entschäumer, der Verzögerer und das Antiabsetzmittel von herkömmlicher Art sind. Die erfindungsgemäße Fußbodenausgleichsmasse ist im pH-Wert neutral, d.h. nicht alkalisch. Als Verflüssiger wird z.B. Formaldehydkondensationsharz eingesetzt.

Besonders zweckmäßig und vorteilhaft ist es, wenn die Teilchengröße des α-Gipses zu 95 % < 90 μm ist, wenn die Teilchengröße des Kalksteinmehls zu 98 % < 40 μm ist und/oder wenn die Teilchengröße des Quarzsandes maximal bis zu 0,2 mm beträgt. Diese Feinheit der mengenmäßig wesentlichen Bestandteile fördert die von der Fußbodenausgleichsmasse geforderten Eigenschaften. Die für Fußbodenausgleichsmassen typische Feinkörnigkeit ist durch die angegebenen Werte ganz ausgeprägt gegeben.

Besonders zweckmäßig und vorteilhaft ist es auch, wenn der α-Gips eine Einstreumenge von mindestens 250 g nach DIN 1168 aufweist. Für die erfindungsgemäße Fußbodenausgleichsmasse ist also ein α-Gips mit hoher Einstreumenge besser geeignet.

Besonders zweckmäßig und vorteilhaft ist es noch, wenn der α-Gips aus Rauchgasgips im kontinuierlichen Autoklavverfahren gewonnen ist. Ein solcher künstlicher α-Gips ist für die erfindungsgemäße Fußbodenausgleichsmasse besonders geeignet.

Besonders zweckmäßig und vorteilhaft ist es noch, wenn der α-Gips bei einem Wasser-Gips-Verhältnis von 0,41 oder weniger ein Fließmaß von 21 cm, also Normalkonsistenz gemäß DIN 51020, aufweist.

Mit der erfindungsgemäßen Fußbodenausgleichsmasse lassen sich weiße Spachtel- und Ausgleichsschichten herstellen. In diesem Sinne ist es besonders zweckmäßig und vorteilhaft, wenn der Quarzsand hell, rein und eisenarm ist und/oder wenn das Kalksteinmehl einen Weißgrad nach Elrepho-Grünfilter von mindestens 80 % aufweist.

Bei einem Ausführungsbeispiel sind 30 Gew.% aus Rauchgasgips gewonnener α-Gips vorgesehen. Es werden 27 Gew.% feingemahlenes Kalksteinmehl mit einem mittleren Teilchendurchmesser von 6 µm vorgesehen, wobei 98 % der Teilchen unter 40 µm groß sind. Da ein weißes Produkt erwünscht ist, besitzt das Kalksteinmehl einen Weißgrad von Elrepho-Grünfilter von 88 %. Es sind 38 Gew.% heller Quarzsand und 3 Gew.% Kunststoff-Dispersionspulver und zwar ein Polyvinylacetat-Ethylen-Copolymerisat, vorgesehen, wobei das Dispersionspulver verlaufsunterstützend wirkt. Es ist 1 Gew.% Verflüssiger vorgesehen und zwar vorteilhaft Melaminformaldeyhd; jedenfalls ist die Fußbodenausgleichsmasse caseinfrei. Entschäumer, Verzögerer und Antiabsetzmittel ergeben zusammen nicht mehr als 1 Gew.%. Eine aus dieser Masse hergestellte Schicht ist nach ca. drei Stunden begehbar. Zum Anmachen werden auf 1 kg Trockenmasse 260 cm³ Wasser gegeben.

"Elrepho ist gemäß der Gebrauchsanleitung "Elektrisches Remissionsphotometer ELREPHO der Firma Carl Zeiss ein Gerät zur Messung von Farben, bei dem zur Messung der Farbe weiß ein grüner Farbmeßfilter verwendet wird. Die Farbmessung erfolgt gemäß DIN 5033. Der Weißgrad wird aufgrund der Farbmessung ermittelt.

## Patentansprüche

1. Fußbodenausgleichsmasse, die im angemachten Zustand selbstnivellierend ist und bei der feinteiliger Gips, Kalksteinmehl, feinkörniger Quarzsand, Kunststoff-Dispersionspulver, Verflüssiger und weitere Zusätze vermischt sind, **dadurch gekennzeichnet,** daß bei zementfreier Masse α-Gips mit 25 - 40 Gew.%, Kalksteinmehl mit 20 - 35 Gew.% und Quarzsand mit 30 - 50 Gew.% vorgesehen ist und die Masse neutral ist.

2. Fußbodenausgleichsmasse nach Anspruch 1, **dadurch gekennzeichnet,** daß die Teilchengröße des α-Gipses zu 95 % < 90 µm ist.

3. Fußbodenausgleichsmasse nach Anspruch 1 oder 2, **dadurch gekennzeichnet,** daß die Teilchengröße des Kalksteinmehls zu 98 % < 40 µm ist.

4. Fußbodenausgleichsmasse nach Anspruch 1, 2 oder 3, **dadurch gekennzeichnet,** daß die Teilchengröße des Quarzsandes maximal bis zu 0,2 mm beträgt.

5. Fußbodenausgleichsmasse nach einem der vorhergehenden Ansprüche, **dadurch gekennzeichnet,** daß der α-Gips eine Einstreumenge von mindestens 250 g pro 100 ml Wasser aufweist (DIN 1168).

6. Fußbodenausgleichsmasse nach einem der vorhergehenden Ansprüche, **dadurch gekenn-**
zeichnet, daß der α-Gips aus Rauchgasgips im kontinuierlichen Autoklavverfahren gewonnen ist.

7. Fußbodenausgleichsmasse nach einem der vorhergehenden Ansprüche, **dadurch gekennzeichnet,** daß der α-Gips bei einem Wasser-Gips-Verhältnis von 0,41 oder weniger ein Fließmaß von 21 cm aufweist (nach DIN 51020).

8. Fußbodenausgleichsmasse nach einem der vorhergehenden Ansprüche, **dadurch gekennzeichnet,** daß der Quarzsand hell, rein und eisenarm ist.

9. Fußbodenausgleichsmasse nach einem der vorhergehenden Ansprüche, **dadurch gekennzeichnet,** daß das Kalksteinmehl einen Weißgrad nach Elrepho-Grünfilter von mindestens 80 % aufweist.

10. Anwendung der Fußbodenausgleichsmasse nach einem der vorhergehenden Ansprüche auf einem Gips- oder Anhydritestrich oder einem Trockenestrich aus Gipskarton- oder Gipsfaserplatten.

## Revendications

1. Masse de nivellement pour sols, qui, à l'état gâché, se nivelle d'elle-même et dans laquelle sont mélangés du gypse finement divisé, de la farine de calcaire, du sable de quartz de fine granulométrie, un agent pulvérulent plastique de dispersion, un agent de liquéfaction et d'autres additifs, caractérisée par le fait que dans la masse, ne contenant pas de ciment, on prévoit 25–40 % en poids de gypse α, 20–35% en poids de farine de calcaire et 30–50% en poids de sable de quartz et par le fait que la masse est neutre.

2. Miasse de nivellement pour sols, selon la revendication 1, caractérisée par le fait que la granulométrie du gypse α est 95% inférieure à 90 µm.

3. Masse de nivellement pour sols selon la revendication 1 ou 2, caractérisée par le fait que la granulométrie de la farine de calcaire est pour 90% inférieure à 40 µm.

4. Masse de nivellement pour sols selon la revendication 1, 2 ou 3, caractérisée par le fait que la granulométrie du sable de quartz vaut au maximum 0,2 mm.

5. Masse de nivellement pour sols selon l'une des revendications précédentes, caractérisée par le fait que le gypse présente un taux d'épandage d'au moins 250 g pour 100 ml d'eau (DIN 1168).

6. Masse de nivellement pour sols selon l'une des revendications précédentes, caractérisée par le fait que l'on obtient le gypse à partir du gypse des fumées par le procédé d'autoclavage continu.

7. Masse de nivellement pour sols selon l'une des revendications précédentes, caractérisée par le fait que, pour un rapport eau-gypse de 0,41 ou moins, le gypse présente une cote de fluage de 21 cm (selon DIN 51020).

8. Masse de nivellement pour sols selon l'une des revendications précédentes, caractérisée par le fait que le sable de quartz est clair, pur et pauvre en fer.

9. Masse de nivellement pour sols selon l'une des revendications précédentes, caractérisée par le fait que la farine de calcaire présente un degré de blanc, selon l'écran vert Elrepho, d'au moins 80%.

10. Emploi de la masse de nivellement pour sols selon l'une des revendications précédentes sur une chape de gypse ou d'anhydrite ou sur une chape sèche de plaques de placoplâtre ou de plaques de gypse armé de fibres.

**Claims**

1. A floor-levelling mass which is self-levelling when prepared and in which fine-particle gypsum, limestone dust, fine-grain quartz sand, synthetic material dispersion powder, liquefier and further additives are mixed together, characterised in that, the mass being cement-free, 25–40% by weight of $\alpha$-gypsum, 20–35% by weight of limestone dust, and 30–50% by weight of quartz sand is provided and that the mass is neutral.

2. A floor-levelling mass according to Claim 1, characterised in that 95% of the $\alpha$-gypsum particles are < 90 µm.

3. A floor-levelling mass according to Claim 1 or 2, characterised in that 98% of the limestone dust particles are < 40 µm.

4. A floor-levelling mass according to Claim 1, 2 or 3, characterised in that the particle size of the quartz sand is up to a maximum of 0.2 mm.

5. A floor-levelling mass according to any one of the preceding claims, characterised in that the $\alpha$-gypsum has an interspersion quantity of at least 250 g per 100 ml water (DIN 1168).

6. A floor-levelling mass according to any one of the preceding claims, characterised in that the w-gypsum is obtained from flue-gas-gypsum in the continuous autoclave process.

7. A floor-levelling mass according to any one of the preceding claims, characterised in that the a-gypsum has a flow measurement of 21cm at a water $\alpha$-gypsum ratio of 0.41 or less.

8. A floor-levelling mass according to any one of the preceding claims, characterised in that the quartz sand is light-coloured, pure and low in iron.

9. A floor-levelling mass according to any one of the preceding claims, characterised in that the limestone dust has a degree of whiteness of at least 80 % according to an Elrepho green filter.

10. Application of the floor-levelling mass according to any one of the preceding claims on a bare floor made of gypsum or anhydrite, or on a dry bare floor made of gypsum cardboard slabs or gypsum fibre slabs.